# EUROPEAN PATENT SPECIFICATION

(11) **EP 1 430 790 B1**
(45) Date of publication and mention of the grant of the patent: **23.04.2008**
(21) Application number: 02799498.7
(22) Date of filing: 24.09.2002
(51) Int. Cl.: A23L 1/19, A23D 7/00, A23G 3/00

(54) **FOAMING OIL-IN-WATER TYPE EMULSIONS AND PROCESS FOR PRODUCING THE SAME**
SCHÄUMENDE EMULSIONEN DES ÖL-IN-WASSER-TYPS UND VERFAHREN ZU IHRER HERSTELLUNG
EMULSIONS DE TYPE HUILE-DANS-EAU POUVANT SE TRANSFORMER EN MOUSSE ET PROCEDE DE PRODUCTION CORRESPONDANT

(30) Priority: 26.09.2001 JP 2001293253
(43) Date of publication of application: 23.06.2004
(73) Proprietor: Fuji Oil Company, Ltd., Osaka-shi, Osaka 542-0086 (JP)
(72) Inventor: ICHIYAMA, Hiroyuki, c/o Fuji Oil Company, Limited, Izumisano-shi, Osaka 598-8540 (JP); NISHITANI, Masahiro, c/o Fuji Oil Company, Limited, Izumisano-shi, Osaka 598-8540 (JP)
(74) Representative: Hayes, Adrian Chetwynd
(86) International application number: PCT/JP2002/009801
(87) International publication number: WO 2003/026441

(56) References cited:
- EP-A- 0 560 429
- EP-A1- 0 540 086
- JP-A- 10 088 184
- JP-A- 10 327 790
- US-A- 3 903 310
- US-A- 5 869 125
- PATENT ABSTRACTS OF JAPAN vol. 1999, no. 03, 31 March 1999 (1999-03-31) -& JP 10 327790 A (FUJI OIL CO LTD), 15 December 1998 (1998-12-15)

## Description

### Technical Field

The present invention relates to a foaming oil-in-water type emulsion showing high overrun, more specifically from 250 to 400% overrun, and having extremely shorter whipping time than that of a conventional foaming oil-in-water type emulsion and excellent heat-resistant shape retention, and to a process for producing the same.

### Background Art

Every cream, for example, whipped cream used in such as cake and parfait and filling cream used in bread as filling, is usually a foaming oil-in-water type emulsion prepared by stirring a homogeneous oil-in-water type emulsion which comprises fat, protein, sugars, emulsifier, water, stabilizer, flavor and so on while aerating. In recent changes in food culture, a trend toward light texture is just as valid for foaming oil-in-water type emulsions, that is high overrun. JP 2 -128644 A has proposed a foaming oil-in-water type emulsion excellent as filling and topping materials for confectionary and bakery, cooking materials and so on, which has improved shelf life, suitableness on the circulation and good taste and is excellent in heat-resistant shape retention and resistance for demulsifying regardless of high overrun. However, the high overrun can only go so far as 130%, and whipping time takes about 3 to 5 minutes. To reduce whipping time is the longstanding demand of the confectionary and bakery industry, in terms of reduction of work hours and stabilization of work.

JP-A-10/327790 discloses a frothing O/W-type emulsion having a water activity (Aw) of ≥ 0.91 and where Aw + 0.07P≤1.02 where P is the wt% of milk protein based on the aqueous phase.

JP-A-10/088184 discloses a foaming O/W-type emulsion comprising fats and saccharides containing 30 to 55% solids, where casein is present in an amount of 0.03 to 3%.

US-A-5869125 discloses an O/W emulsion spread comprising a continuous aqueous phase comprising 10 to 45% fat, the whipped spread having a whipping overrun of at least about 200%.

EP-A-560429 discloses a non-dairy cream comprising 0.05-0.5 wt% emulsifier, 0.5-8 wt% egg yolk, 0.01-1wt% caseinate, 0.5-4wt% egg white, 0-1wt% thickener, 1-10wt% carbohydrate, 25-45wt% fat and water.

### Disclosure of Invention

An object of the present invention is to provide a foaming oil-in-water type emulsion having extremely short whipping time and excellent heat-resistant shape retention yet showing high overrun, more specifically from 250 to 400% overrun, and a process for producing the same.

The present inventors have studied intensively to solve the above problems. As a result, the present inventors have accomplished the present invention by using a casein-containing protein in a specific amount and reducing significantly an amount of total proteins.

That is, the first aspect of the present invention is a foaming oil-in-water type emulsion comprising fats and saccharides as main components and containing from 30 to 55% by weight of total solid matters, where the content of casein-containing protein is from 0.05 to 0.8% by weight in terms of the solid matters in the emulsion and, concurrently, the total content of proteins is from 0.05 to 0.8% by weight in terms of the solid matters, the average particle diameter of fat particles in the foaming oil-in-water type emulsion is within the range from 0.4 to 1.2 µm, and the emulsion shows 250 to 400% overrun of foamed matter of said emulsion within 40 seconds to 2 minutes. The second aspect is a process for producing a foaming oil-in-water type emulsion comprising fats and saccharides as the main components, said process comprising using 30 to 55% by weight of total solid matters, wherein casein-containing protein is used in an amount of 0.05 to 0.8% by weight in terms of the solid matters and, concurrently, the total amount of proteins used is from 0.05 to 0.8% by weight in terms of the solid matters in the emulsion, said emulsion being processed so that the average particle diameter of fat particles is within the range from 0.4 to 1.2 µm.

### Best Mode for Performing the Invention

The foaming oil-in-water type emulsion of the present invention comprises fats and saccharides as the main terms of the solid matters in the emulsion, and processing the emulsion so that the average particle diameter of fat particles is within the range from 0.4 to 1.2 µm.

### Best Mode for Performing the Invention

The foaming oil-in-water type emulsion of the present invention comprises fats and saccharides as the main components, contains 30 to 55% by weight of total solid matters, contains 0.05 to 0.8% by weight of casein-containing protein in terms of the solid matters and, concurrently contains 0.05 to 0.8% by weight of total proteins in terms of the solid matters in the emulsion.

Examples of fats of the present invention include one or a mixture of two or more of animal and plant fats and hydrogenated fats thereof and chemically- or physically-processed matters thereof. Examples of such fats include animal and plant fats such as soybean oil, cottonseed oil, corn oil, safflower oil, olive oil, palm oil, rapeseed oil, rice bran oil, sesame oil, kapok oil, coconut oil, palm kernel oil, cacao oil, milk fat, lard, fish oil, whale oil, and hydrogenated oil thereof, and processed fats (having a melting point about 15 to 40°C) such as fractionated oil, interesterified oil and so on.

Examples of saccharides of the present invention include monosaccharides, oligosaccharides, sugar alcohols, dextrin, starch syrup and so on. Specifically, as the monosaccharides, there are, for instance, glucose, fructose, mannose, xylose and so on. Examples of the oligosaccharide usually include from disaccharides to hexasaccharides, and, specifically, there are, for instance, sucrose, maltose, lactose, trehalose, maltotriose and so on. Specific examples of sugar alcohols include sorbitol, maltitol, mannitol, erythritol, xylitol, oligosaccharide alcohols and so on.

The foaming oil-in-water type emulsion of the present invention comprises fats and saccharides as the main components and contains protein(s), which needs to contain 30 to 55% by weight, preferably by 40 to 55% by weight of total solid matters. When the total amount of solid matters is lower than 30% by weight, shape retention at the optimal foamed state tends to be deteriorated. When higher than 55% by weight, overrun tends to be decreased.

Examples of proteins used in the present invention include proteins derived from milk, defatted milk, sweetened condensed milk, unsweetened condensed milk, whole milk powder, skim milk powder, buttermilk, buttermilk powder, whey, whey powder, casein, casein sodium, lactalbumin, fresh cream and so on, and also include proteins other than milk protein such as egg protein and soybean protein. As egg protein, there are liquid or dried yolk, white and whole egg, as well as single (simple) protein isolated therefrom, for example, ovalbumin, conalbumin, ovomucoid, ovoglobulin and so on. Examples of soybean protein include soybean milk, defatted soybean flour, condensed soybean protein, soybean protein isolate, defatted soybean milk powder, soybean protein hydrolyzate and so on.

Examples of casein-containing protein used in the present invention include total milk protein obtained by defatting and ultrafiltrating (UF) milk and/or casein and casein sodium obtained from milk by acid precipitation by addition of an acid or by lactic fermentation and/or by precipitation by addition of rennet or calcium and so on.

As the protein used in the present invention, an above-mentioned protein is used. However, it is necessary that the total amount of proteins in the foaming oil-in-water type emulsion is within the range from 0.05 to 0.8% by weight in terms of the solid matters. In case of below the lower limit, a larger average particle diameter is resulted, which causes decreased overrun. Then, shape retention at the optimal foamed state tends to be deteriorated. In case of above the higher limit, longer whipping time is resulted, and shape retention at the optimal state tends to be deteriorated.

In addition, concurrently, it is necessary to contain casein-containing protein within the range from 0.05 to 0.8% by weight in terms of the solid matters. The casein-containing protein is included in the total proteins. When an amount of casein-containing protein is below the lower limit, a larger average particle diameter is resulted, which causes decreased overrun. Then, shape retention at the optimal foamed state tends to be deteriorated. When higher than the upper limit, whipping time tends to be longer.

An average particle diameter of the fat particles in the foaming oil-in-water type emulsion of the present invention is within the range from 0.4 to 1.2 µm, more preferably within the range from 0.6 to 1.1 µm, still more preferably within the range from 0.7 to 1.1 µm. Examples of means for adjusting an average particle diameter of the fat particles include a high-speed rotary stirring and dispersing machine such as homomixer, Shurflo, Silverson mixer, an ultrasonic emulsifier such as Ultrajetter, Dispersonic, pressure nozzle emulsifier (homogenizer).

The much smaller the average particle diameter of the fat particles, the longer the time is required to whip. Contrary, too large average particle diameter decreases overrun, and shape retention at the optimal foamed state tends to be deteriorated.

An average particle diameter as used in the present invention refers to a particle diameter corresponding to 50% of cumulative distribution in terms of particle diameter volume, which is a value measured by laser scattering particle size distribution analyzer (LA500,

The foaming oil-in-water type emulsion of the present invention has short whipping time and overrun from 250 to 400%. As for a foaming instrument, there are batch type and continuous type, and the batch type is more effective in the term of short whipping time in the present invention. Examples of the batch type include, Kenmix, Hobart-mixer, Kanto-mixer and so on. Examples of the continuous type include Whip master FT40 (manufactured by Itochu Footech Co. Ltd), Turbo-Mix TM300 (manufactured by Aicohsha Manufacturing Co., Ltd.) and so on.

The foaming oil-in-water type emulsion of the present invention has a whipping time of 40 seconds to 2 minutes, while the whipping time of conventional foaming oil-in-water type emulsions is 3 minutes to 5 minutes.

The overrun of a foamed matter is 250 to 400%, and more preferably 270 to 370%. In case of too low overrun, a fluffy light texture of interest cannot be obtained. In case of too high overrun, shape retention at the optimal foamed state tends to be deteriorated.

When producing the foaming oil-in-water type emulsion of the present invention, a synthetic emulsifier that have been used conventionally, such as lecithin, monoglyceride, sorbitan fatty acid ester, propylene glycol fatty acid ester, polyglycerol ester of fatty acid, sucrose ester of fatty acid, may be used.

In the foaming oil-in-water type emulsion of the present invention, it is preferred to use various salts, and preferred to use alone or in combination of two or more of hexametaphosphate, dibasic phosphate, sodium citrate, polyphosphate, baking soda and so on.

In addition, if desired, a flavor, a colorant and/or a preservative may be used.

The process for producing the foaming oil-in-water type emulsion of the present invention may be performed in a manner of producing conventional cream. Specific example thereof will be illustrated hereinafter. Each raw material is pre-emulsified for 20 minutes at 60 to 70°C (a homomixer is used as an emulsifying equipment), and then, if necessary, homogenized under conditions of.70 to 250 Kg/cm² (a homogenizer is used as an emulsifying equipment). The material is then processed with ultra high temperature (UHT), thereafter homogenized again under conditions of 70 to 250 Kg/cm², cooled, and aged for about 24 hours. Homogenization may be performed either before or after of sterilization, or may be two-step emulsification in combination of both.

There are two methods of ultra high temperature (UHT) sterilization: indirect heating and direct heating. Examples of an indirect heating apparatus include, but not limited to, APV plate-type UHT treatment apparatus (manufactured by APV Co. Ltd.), CP-UHT sterilizer (manufactured by Climaty Package Co. Ltd.), Stork tubular-type sterilizer (manufactured by Stork Food & Dairy Systems Inc.), Contherm scraped surface UHT sterilizer (manufactured by Tetra pak Alfa-Laval Co. Ltd.) and so on. Examples of a direct heating sterilizer include UHT sterilizer such as UHT Sterilizer (manufactured by IWAI Engineering System Co. Ltd.), Uperization sterilizer (manufactured by Tetra pak Alfa-Laval Co. Ltd.), VTIS sterilizer (manufactured by Tetra pak Alfa-Laval Co..Ltd.), Lagear UHT sterilizer (manufactured by Lagear Co. Ltd.), Paralyzator (manufactured by Pash and Silkevogue Co. Ltd.) and so on. Any apparatus of them may be used.

### Examples

Hereinafter, the present invention will be illustrated in detail by Examples. However, the following Examples are not construed to limit the spirit of the present invention. It is noted that all the "parts" and "%" are by weight. Particularly, it goes without saying that orders of addition of additives or emulsification in which an oil phase is add to an aqueous phase or the aqueous phase is add to the oil phase would not be limited by the following Examples.

Results were evaluated according to the following methods.
(1) whipping time: time to achieve the optimal foamed state for 500 g of a foaming oil-in-water type emulsion by whipping with Kenmix (manufactured by Aicohsha Manufacturing Co., Ltd., type: 302-E-004) at scale 5 (rate at 240 rpm).
(2) overrun: [(mass of an oil-in-water type emulsion in determined volume)-(mass of foamed matter in determined volume)] ÷ (mass of foamed matter in determined volume) × 100
(3) shape retention: fineness of a flower-shaped foamed matter after 24 hours standing at 15°C on a scale of 4-point scale.
   A: good
   B: slightly good
   C: slightly bad
   D: bad (impractical)
(4) texture: evaluating the state of texture simultaneously with the evaluation of the shape retention on a scale of 3-point scale.
   ⊚ excellent
   ○ good
   × bad
(5) syneresis: evaluating the state of syneresis simultaneously with the evaluation of the shape retention on a scale of 4-point scale.
   - not occurred
   -+ slightly occurred
   + occurred
   ++ considerably occurred

### Example 1

To. 12.0 parts of hydrogenated coconut oil and 12.5 parts of hydrogenated palm kernel oil were added 0.1 parts of lecithin and 0.2 parts of sorbitan monostearate (manufactured by Kao Corporation, trade name: Emasol S-10F) and the resultant mixture was stirred to prepare an oil phase.

Aside from this, 20.0 parts of sugar, 0.6 part of casein sodium L (manufactured by San-Ei Gen F.F.I., Inc., casein-containing protein 91%), 0.2 parts of sugar ester (manufactured by Mitsubishi-Kagaku Foods Corporation, trade name: S-570), 0.1 part of sodium hexametaphosphate (0.1 part) and 0.02 part of baking soda were dissolved in 54.28 parts of water to prepare an aqueous phase. The above oil phase and aqueous phase were stirred with a homomixer for at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 100 Kg/cm², and immediately after that, cooled to 5°C. After cooling, the resultant emulsion was aged for about 24 hours to obtain a foaming oil-in-water type emulsion (total solid matters: 45.6% by weight, total proteins: 0.55% by weight, casein-containing protein: 0.55% by weight, average particle diameter: 0.55 µm). The emulsion was evaluated according to the above whipping method.

### Example 2

To 24.5 parts of palm kernel oil were added 0.1 part of lecithin and 0.2 part of stearic acid monoglyceride (manufactured by Riken Vitamin Co. Ltd., trade name: Emulsee MS), and the resultant mixture was stirred to prepare an oil phase.

Aside from this, 17.0 parts of sugar, 0.3 part of casein sodium L (manufactured by San-Ei Gen F.F.I., Inc., casein-containing protein 91%), 0.2 part of sugar ester (manufactured by Mitsubishi-Kagaku Foods Corporation, trade name: S-570), 0.1 part of sodium hexametaphosphate and 0.02 part of baking soda were dissolved in 57.58 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 200 Kg/cm², and, immediately after that, cooled to 5°C. After cooling, the resultant emulsion was aged for about 24 hours to obtain a foaming oil-in-water type emulsion (total solid matters: 42.3% by weight, total proteins: 0.27% by weight, casein-containing protein: 0.27% by weight, average particle diameter: 0.80 µm). The emulsion was evaluated according to the above whipping method.

### Example 3

To 12.5 parts of hydrogenated palm middle melting point oil and 12.0 parts of palm kernel oil were added.0.1 part of lecithin and 0.2 part of sorbitan monostearate (manufactured by Kao corporation, trade name: Emasol S-10F), and the resultant mixture was stirred to prepare an oil phase.

Aside from this, 28.0 parts of maltose, 0.3 part of casein sodium L (manufactured by San-Ei Gen F.F.I., Inc., casein-containing protein 91%), 0.4 part of egg yolk, 0.2. part of sugar ester (manufactured by Mitsubishi-Kagaku Foods Corporation, trade name: S-570), 0.1 part of sodium hexametaphosphate and 0.02 parts of baking soda were dissolved in 46.18 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 200 Kg/cm², and, immediately after that, cooled to 5°C. After cooling, the resultant emulsion was aged for about 24 hours to obtain a foaming oil-in-water type emulsion (total solid matters: 52.1% by weight, total proteins: 0.39% by weight, casein-containing protein: 0.27% by weight, average particle diameter: 0.46 µm). The emulsion was evaluated according to the above whipping method.

### Example 4

To 24.5 parts of palm kernel oil were added 0.1 part of lecithin and 0.2 part of sorbitan monostearate. (manufactured by Kao corporation, trade name: Emasol S-10F) and the resultant mixture was stirred to prepare an oil phase.

Aside from this, 15.0 parts of maltose, 0.3 part of casein sodium L (manufactured by San-Ei Gen F.F.I., Inc., casein-containing protein 91%), 0.2 part of sugar ester (manufactured by Mitsubishi-Kagaku Foods Corporation, trade name: S-570), 0.1 part of sodium hexametaphosphate and 0.02 part of baking soda were dissolved in 59.58 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), and then homogenized at homogenizing pressure of 200 Kg/cm², and immediately after that, cooled to 5°C. After cooling, the resultant emulsion was aged for about 24 hours to obtain a foaming oil-in-water type emulsion (total solid matters: 39.4% by weight, total proteins: 0.27% by weight, casein-containing protein: 0.27% by weight, average particle diameter: 0.81 µm). The emulsion was evaluated according to the above whipping method.

### Example 5

To 24.5 parts of palm kernel oil were added 0.1 part of lecithin and 0.2 part of sorbitan monostearate (manufactured by Kao corporation, trade name: Emasol S-10F), and the resultant mixture was stirred to prepare an oil phase.

Aside from this, 10.0 parts of maltose, 0.3 part of casein sodium L (manufactured by San-Ei Gen F.F.I., Inc., casein-containing protein 91%), 0.2 part of sugar ester (Mitsubishi-Kagaku Foods Corporation, trade name: S-570), 0.1 part of sodium hexametaphosphate and 0.02 part of baking soda were dissolved in 64.58 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 200 Kg/cm², and immediately after that, cooled to 5°C. After cooling, the resultant emulsion was aged for about 24 hours to obtain a foaming oil-in-water type emulsion (total solid matters: 34.7% by weight, total proteins: 0.27% by weight, casein-containing protein: 0.27% by weight, average particle diameter: 0.90 µm). The emulsion was evaluated according to the above whipping method.

Results of Examples 1 to 5 are summarized in Table 1.

**Table 1**

| | Example 1 | Example 2 | Example 3 | Example 4 | Example 5 |
|---|---|---|---|---|---|
| whipping time | 1'30" | 50" | 39" | 44" | 53" |
| overrun (%) | 272 | 310 | 268 | 329 | 380 |
| shape retention | A | A | A | A | B |
| texture | ○ | ⊚ | ⊚ | ○ | ○ |
| syneresis | - | - | - | -+ | -+ |
| particle diameter | 0.55 | 0.80 | 0.46 | 0.81 | 0.90 |

### Comparative Example 1

To 12.0 parts of hydrogenated coconut oil and 12.5 parts of hydrogenated palm kernel oil were added 0.1 part of lecithin and 0.2 part of sorbitan monostearate (manufactured by Kao corporation, trade name: Emasol S-10F) and the resultant mixture was stirred to prepare an oil phase.

Aside from this, 20.0 parts of sugar, 0.03 part of casein sodium L (manufactured by San-Ei Gen F.F.I., Inc., casein-containing protein 91%), 0.2 part of sugar ester (manufactured by Mitsubishi-Kagaku Foods Corporation, commercial name: S-570), 0.1 part of sodium hexametaphosphate and 0.02 part of baking soda were dissolved in 54.85 parts of water to prepare an aqueous phase. The above oil phase and aqueous phase were stirred with a homomixer at 65°C for 30 minutes to conduct pre-emulsification, and then sterilized by direct heating at 145°C with UHT Sterilizer (manufactured by IWAI Engineering System Co. Ltd.) for four seconds, homogenized at homogenizing pressure of 200 Kg/cm², and immediately after that, cooled to 5°C. After cooling, the resultant emulsion was aged for about 24 hours to obtain a foaming oil-in-water type emulsion (total solid matters: 45.1% by weight, total proteins: 0.03% by weight, casein-containing protein: 0.03% by weight, average particle diameter: 15.23 µm). The emulsion was evaluated according to the above whipping method.

### Comparative Example 2

To 12.0 parts of hydrogenated coconut oil and 12.5 parts of hydrogenated palm kernel oil were added 0.1 part of lecithin and 0.2 part of sorbitan monostearate (manufactured by Kao corporation, trade name: Emasol S-10F) and the resultant mixture was stirred to prepare an oil phase.

Aside from this, 22.0 parts of sugar, 4.0 parts of skim milk powder, 0.2 part of sugar ester (Mitsubishi-Kagaku Foods Corporation, trade name: S-570), 0.1 part of sodium hexametaphosphate and 0.02 part of baking soda were dissolved in 48.88 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 200 Kg/cm². immediately after that, cooled to 5°C. After cooling, the resultant emulsion was aged for about 24 hours to obtain a foaming oil-in-water type emulsion (total solid matters: 49.8% by weight, total proteins: 1.48% by weight, casein-containing protein: 1.18% by weight, average particle diameter: 0.60 µm). The emulsion was evaluated according to the above whipping method.

### Comparative Example 3

To 12.0 parts of hydrogenated coconut oil and 12.5 parts of hydrogenated palm kernel oil were added 0.1 part of lecithin and 0.2 part of sorbitan monostearate (manufactured by Kao corporation, trade name: Emasol S-10F) and the resultant mixture was stirred to prepare an oil phase.

Aside from this, 20.0 parts of sugar, 0.3 part of casein sodium L (manufactured by San-Ei Gen F.F.I., Inc., casein-containing protein 91%), 0.2 part of sugar ester (manufactured by Mitsubishi-Kagaku Foods Corporation, trade name: S-570), 0.1 part of sodium hexametaphosphate and 0.02 part of baking soda were dissolved in 54.58 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 50 Kg/cm², and immediately after that, cooled to 5°C. After cooling, the resultant emulsion was aged for about 24 hours to obtain a foaming oil-in-water type emulsion (total solid matters: 45.4% by weight, total proteins: 0.27% by weight, casein-containing protein: 0.27% by weight, average particle diameter: 1.40 µm). The emulsion was evaluated according to the above whipping method.

### Comparative Example 4

To 15.0 parts of palm kernel oil were added 0.1 part of lecithin and 0.2 part of Sorbitan Monostearate (manufactured by Kao corporation, trade name: Emasol S-10F) and stirred to prepare an oil phase.

Aside from this, 10.0 parts of maltose, 0.3 part of casein sodium L (manufactured by San-Ei Gen F.F.I., Inc., casein-containing protein 91%), 0.2 part of sugar ester (manufactured by Mitsubishi-Kagaku Foods Corporation, trade name: S-570), 0.1 part of sodium hexametaphosphate and 0.02 part of baking soda were dissolved in 74.08 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), and then homogenized at homogenizing pressure of 200 Kg/cm², and immediately after that, cooled to 5°C. After cooling, the resultant emulsion was aged for about 24 hours to obtain a foaming oil-in-water type emulsion (total solid matters: 25.2% by weight, total proteins: 0.27% by weight, casein-containing protein: 0.27% by weight, average particle diameter: 1.15 µm). The emulsion was evaluated according to the above whipping method.

### Comparative Example 5

To 29.5 parts of palm kernel oil were added 0.1 part of lecithin and 0.2 part of monoglycerin fatty acid ester (manufactured by Riken Vitamin Co. Ltd., trade name: Emulsee MS) and the resultant mixture was stirred to prepare an oil phase.

Aside from this, 30.0 parts of sugar, 0.3 part of casein sodium L (manufactured by San-Ei Gen F.F.I., Inc., casein-containing protein 91%), 0.2 part of sugar ester (manufactured by Mitsubishi-Kagaku Foods Corporation, trade name: S-570), 0.1 part of sodium hexametaphosphate and 0.02 part of baking soda were dissolved in 39.58 parts of water to prepare an aqueous phase. The above oil phase and aqueous phase were stirred with a homomixer at 65°C for 30 minutes to conduct pre-emulsification, and then sterilized by direct heating at 145°C for 4 seconds with UHT Sterilizer (manufactured by IWAI Engineering System Co. Ltd.), homogenized at homogenizing pressure of 200 Kg/cm², and immediately after that, cooled to 5°C. After cooling, the resultant emulsion was aged for about 24 hours to obtain a foaming oil-in-water type emulsion (total solid matters: 60.3% by weight, total proteins: 0.27% by weight; casein-containing protein: 0.27% by weight, average particle diameter: 0.46 µm). The emulsion was evaluated according to the above whipping method.

Results of Comparative Examples 1 to 5 are summarized in Table 2.

**Table 2**

| | Comparative Example 1 | Comparative Example 2 | Comparative Example 3 | Comparative Example 4 | Comparative Example 5 |
|---|---|---|---|---|---|
| whipping time | 44" | 4' 13" | 1'20" | 3' 45" | 55" |
| overrun (%) | 160 | 180 | 150 | 365 | 155 |
| shape retention | C | C | D | D | A |
| texture | × | × | × | × | o |
| syneresis | -+ | ++ | ++ | ++ | - |
| particle diameter | 15.23 | 0.60 | 1.40 | 1.15 | 0.46 |

### Industrial Applicability

According to the present invention, it is possible to provide a foaming oil-in-water type emulsion having extremely short whipping time and excellent heat-resistant shape retention yet showing high overrun, more specifically from 250 to 400% overrun, and a process for producing the same.

## Claims

1. A foaming oil-in-water type emulsion comprising fats and saccharides as main components and containing from 30 to 55% by weight of total solid matters, wherein the content of casein-containing protein is from 0.05 to 0.8% by weight in terms of the solid matters in the emulsion and, concurrently, the total content of proteins is from 0.05 to 0.8% by weight in terms of the solid matters, the average particle diameter of fat particles in the foaming oil-in-water type emulsion is within the range from 0.4 to 1.2 µm, and the emulsion shows 250 to 400% overrun of foamed matter of said emulsion within 40 seconds to 2 minutes.

2. A process for producing the foaming oil-in-water type emulsion according to claim 1 having a 250 to 400% overrun of foamed matter of said emulsion within 40 seconds to 2 minutes, which comprises using 30 to 55% by weight of total solid matters, wherein casein-containing protein is used in an amount of 0.05 to 0.8% by weight in terms of the solid matters and, concurrently, the total amount of proteins used is from 0.05 to 0.8% by weight in terms of the solid matters in the emulsion, said emulsion being processed so that the average particle diameter of fat particles is within the range from 0.4 to 1.2 µm.

## Patentansprüche

1. Schäumende Emulsion vom Typ Öl-in-Wasser umfassend Fette und Saccharide als Hauptkomponenten und enthaltend 30 bis 55 Gew.% Gesamtfeststoff, wobei der Gehalt an Kasein-haltigem Protein 0,05 bis 0,8 Gew.% bezogen auf den Gesamtfeststoff in der Emulsion beträgt und gleichzeitig der Gesamtgehalt an Proteinen 0,05 bis 0,8 Gew.%, bezogen auf die Feststoffe, beträgt, der mittlere Teilchendurchmesser der Fettteilchen in der schäumenden Emulsion vom Typ Öl-in-Wasser innerhalb des Bereichs von 0,4 bis 1,2 µm liegt und die Emulsion innerhalb von 40 Sekunden bis 2 Minuten einen Überlauf schaumiger Materie von 250 bis 400 % zeigt.

2. Verfahren zum Herstellen der schäumenden Emulsion vom Typ Öl-in-Wasser gemäß Anspruch 1 einem Überlauf schaumiger Materie von 250 bis 400 % innerhalb von 40 Sekunden bis 2 Minuten, der das Verwenden von 30 bis 55 Gew.% Gesamtfeststoff umfaßt, wobei Kasein-haltiges Protein in einer Menge von 0,05 bis 0,8 Gew.% bezogen auf die Feststoffe verwendet wird, die verwendete Gesamtmenge der Proteine 0,05 bis 0,8 Gew.% bezogen auf die Feststoffe in der Emulsion beträgt, wobei die Emulsion so behandelt wird, daß der mittlere Teilchendurchmesser der Fetteilchen innerhalb des Bereichs von 0,4 bis 1,2 µm liegt.

## Revendications

1. Emulsion de type huile-dans-eau moussante comprenant des graisses et des saccharides comme constituants principaux et contenant de 30 à 55 % en poids de matières solides totales, dans laquelle la teneur en protéine contenant de la caséine est de 0,05 à 0,8 % en poids en termes des matières solides dans l'émulsion et, concurremment, la teneur totale des protéines est de 0,05 à 0,8 % en poids en termes des matières solides, le diamètre moyen de particules des particules de graisse dans l'émulsion de type huile-dans-eau moussante se trouve dans l'intervalle de 0,4 à 1,2 µm et l'émulsion présente de 250 à 400 % de surcharge de matière ayant moussé de ladite émulsion en de 40 secondes à 2 minutes.

2. Procédé pour la production de l'émulsion de type huile-dans-eau moussante selon la revendication 1 présentant de 250 à 400 % de surcharge de matière ayant moussé de ladite émulsion en de 40 secondes à 2 minutes, lequel comprend l'utilisation de 30 à 55 % en poids de matières solides totales, dans lequel on utilise une protéine contenant de la caséine dans une quantité de 0,05 à 0,8 % en poids en termes des matières solides et, concurremment, la quantité totale de protéines utilisées est de 0,05 à 0,8 % en poids en termes des matières solides dans l'émulsion, ladite émulsion étant traitée de telle sorte que le diamètre moyen de particules des particules de graisse se trouve dans l'intervalle de 0,4 à 1,2 µm.
